# EUROPEAN PATENT SPECIFICATION

(11) **EP 3 309 576 B1**
(45) Date of publication and mention of the grant of the patent: **11.08.2021**
(21) Application number: 16193857.6
(22) Date of filing: 14.10.2016
(51) Int. Cl.: G06N 20/00, G01S 5/02, H04W 4/02, H04W 64/00

(54) **METHOD FOR PROVIDING POSITIONING INFORMATION OF A USER EQUIPMENT IN A MOBILE COMMUNICATION NETWORK**
VERFAHREN ZUR BEREITSTELLUNG VON POSITIONSINFORMATIONEN EINES BENUTZERGERÄTS IN EINEM MOBILKOMMUNIKATIONSNETZWERK
PROCÉDÉ PERMETTANT DE FOURNIR DES INFORMATIONS DE POSITIONNEMENT D'UN ÉQUIPEMENT UTILISATEUR DANS UN RÉSEAU DE COMMUNICATION MOBILE

(43) Date of publication of application: 18.04.2018
(73) Proprietor: Deutsche Telekom AG, 53113 Bonn (DE)
(72) Inventor: KADELKA, Arndt, 59674 Cologne (DE)
(74) Representative: Schwöbel, Thilo K.

(56) References cited:
- EP-A1- 1 726 970
- US-A1- 2012 258 733
- US-A1- 2014 274 160
- None

## Description

### BACKGROUND

The present invention relates to a method for providing positioning information of a user equipment in a mobile communication network. The present invention further relates to a mobile communication network wherein the mobile communication network comprises a location server and a base station configured to serve a user equipment.

In mobile communication networks the position of a user equipment (UE), e.g. a mobile phone or a smart phone, may be determined by the user equipment itself. Present user equipment is usually provided with satellite navigation system receivers for determining geo-positioning information. Those solutions are highly accurate, however, they rely on a good line-of sight between the user equipment and some of the satellites of the satellite navigation system. Consequently, gathering of position information by sole use of satellite navigation systems is deteriorated when the user equipment is located inside a building or in between buildings due to shielding of the radio signals coming from the satellites.

Present mobile communication networks provide solutions to gather position information of a user equipment without using satellite navigation. Those mobile communication networks allow to derive positioning information of user equipment exclusively by analysis of measurements carried out by network elements, e.g. by a base station (also known as NB or eNB) of the mobile communication network. Those networks usually comprise a location server that determines positioning information for the user equipment based on specific measurement data. Further disclosures relating to the technical field are provided in US 2021/258733 A1, US 2014/274160 A1 and EP 1 726 970 A1.

Those mobile communication networks typically use a rigid architecture that makes use of specific transport protocols and analysis algorithms relating to a given type of measurement. Those architectures have been designed to serve the requirements imposed by a single use case which is locating emergency calls of human-operated user equipment. However, with new use cases arising in today's mobile communication networks, e.g. localizing internet of things (IoT) devices or localizing a huge amount of individual sensor devices spread in the environment, those networks are confronted with diverse requirements e.g. in terms of position accuracy, reliability, energy consumption, application environment and connection bandwidth connectivity. The rigid architectures of state of the art mobile communication networks are rather hindering for those applications.

### SUMMARY

An object of the present invention is to provide positioning information for user equipment in mobile communication networks for use cases other than locating emergency calls.
- The object of the present invention is achieved by a method for providing positioning information according to claim 1.
- Further, the object of the present invention is achieved by a mobile communication network according to claim 10.

Further, the object of the present invention is achieved by a system according to claim 11.

According to the invention a request for positioning information of the first user equipment is transmitted from a requesting service to the location server of the mobile communication network. The requesting service may part of the mobile communication network or may be a third-party service connected to the mobile communication network. A first measurement data is transmitted from the first user equipment to the location server. In addition, a second measurement data is transmitted from the first base station to the location server. The first base station is serving the first user equipment, which means that there is an existing radio connection between the first user equipment and the first base station. In other words, the first user equipment is logged into the cell of the first base station. According to the invention, the location server selects one or more of the first measurement data and the second measurement data as selected measurement data. The selection is done dependent on a use case requirement of the requesting service so as to select the measurement data that enables to provide positioning information that suits the requirements of the present use case best. Based on the selected measurement data the location server determines positioning information for the first user equipment. The determined is then transmitted from the location server to the requesting service.

According to a preferred embodiment of the present invention the use case requirement comprises one or more of a positioning accuracy requirement, a confidence level requirement and an update rate of positioning information requirement.

In case the use case requirement comprises a strict position accuracy requirement, the location server may select measurement data transmitted that is suited for achieving a high positioning accuracy. If the accuracy requirement is less strict, but the use case requires a rather high update rate less accurate measurement data might be selected that is available with an increased update rate.

According to a preferred embodiment of the present invention the use case requirement of the requesting service is transmitted from the requesting service to the location server, preferably together with the request.

Thereby it is advantageously possible to select measurement data based on different use case requirements for each request individually. Thus, the location server can - sequentially or in parallel - serve various requests of the same or different requesting services, wherein each requesting service is served with positioning information according to its individual use case requirements send together with the request.

According to the invention, the use case requirement of the requesting service is stored at the location server.

Thereby it is advantageously possible to serve a requesting service according to the respective use case requirements linked with said requesting service and stored at the location server. Each time the location server receives a request from said requesting service the same use case requirements are taken into consideration for selecting measurement data. This approach comes with the benefit of reduced data bandwidth required for transmission of each request.

According to the invention the first measurement data is measured by observing a radio signal of a second user equipment.

Thereby it is advantageously possible to gather positioning information of the first user equipment with regard to the position of a second user equipment. Preferably, a second position information for the second user equipment is available to the location server.

According to the invention the first measurement data is measured by a gyroscope and/or an accelerometer and/or a satellite navigation system receiver.

Thereby it is advantageously possible to make measurement data of the gyroscope and/or the accelerometer and/or the satellite navigation system receiver of the first user equipment available to the location server.

According to a preferred embodiment of the invention the second measurement data is measured by observing a radio signal of the first user equipment.

Thereby it is advantageously possible to gather positioning information of the first user equipment with regard to the position of the first base station. Preferably, the location of the base station is known at the location server.

According to an alternate preferred embodiment of the invention the second measurement data is measured by observing a radio transmission channel between the first base station and the first user equipment.

Thereby it is advantageously possible to analyse data transmission between the first user equipment and the first base station and derive measurement data therefrom. Preferably, complex channel state information (CSI) resulting from an analysis of the MIMO receive path of the first base station is measured and transmitted to the location server as second measurement data.

According to a preferred embodiment of the invention the first measurement data is transmitted from the first user equipment to the location server periodically or when triggered by an event and/or the second measurement data is transmitted from the first base station to the location server periodically or when triggered by an event.

By periodically transmitting the first measurement data and/or the second measurement data a push mode transmission can be realized, wherein the source of measurements automatically transmits measurement data to the location server. Alternatively, the first measurement data and/or the second measurement data may be transmitted only when a measurement event happens.

According to an alternate preferred embodiment of the invention the first measurement data is transmitted from the first user equipment to the location server triggered by a measurement request of the location server and/or the second measurement data is transmitted from the first base station to the location server triggered by a measurement request of the location server.

Thereby it is advantageously possible to implement a pull mode in which the location server controls the beginning of measurement data transmission between the measurement sources and the location server. Preferably, the measurement request of the location server specifies a measurement procedure to be carried out be the first base station or by the first user equipment. The specified measurement procedure may be selected from a list of multiple available measurement procedures.

According to a preferred embodiment of the invention a third measurement data is transmitted from a second base station to the location server, wherein the second base station is not serving the first user equipment.

Thereby it is advantageously possible to use information gathered by a second base station, in particular neighbouring the first base station. The third measurement data may be used for observed time difference of arrival (OTDOA) analysis by the location server of for enhanced cell ID (eCID) analysis by the location server.

According to a preferred embodiment of the invention a fourth measurement data is transmitted from a second user equipment to the location server.

Thereby it is advantageously possible to additionally include measurements of user equipment other than the first user equipment.

Preferably the third measurement data and/or the fourth measurement data is measured by observing a radio signal of the first user equipment.

Thereby it is advantageously possible to gather positioning information of the first user equipment with regard to the position of a second user equipment or with regard to the position of a second base station.

According to a preferred embodiment of the invention the location server selects one or more of the first measurement data and the second measurement data as selected measurement data based on a machine learning technique.

Thereby it is advantageously possible to provide position information for the first user equipment with increased accuracy and/or confidence level.

Additionally, the present invention relates to a computer program comprising a computer readable program code which, when executed on a server of a communication network or in part on a server and in part on a user equipment, causes the server and/or the user equipment to perform a method as described before.

Further additionally, the present invention relates to a computer program product for providing positioning information of a user equipment in a mobile communication network, the computer program product comprising a computer program stored on a storage medium, the computer program comprising program code which, when executed on a server of a communication network or in part on a server and in part on a user equipment, causes the server and/or the user equipment to perform a method as described before.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a first embodiment of system according to the present invention.
Figure 2 schematically illustrates a second embodiment of a system according to the present invention.
Figure 3 schematically illustrates the procedures carried out in the location server.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

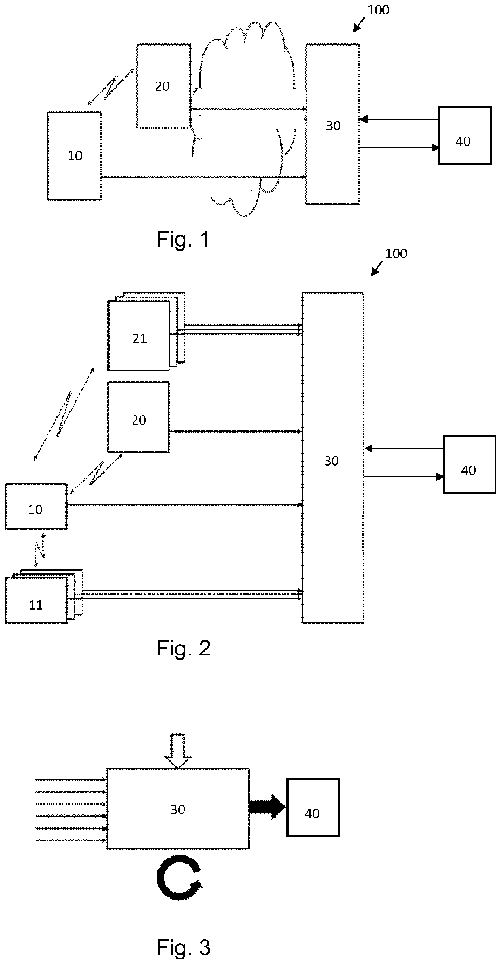

In Figure 1, a system for providing positioning information of a first user equipment 10 in a mobile communication network 100 is illustrated.

The system comprises a mobile communication network 100 and a first user equipment 10. The mobile communication network 100 includes a location server 30 and a first base station 20, wherein the first base station 20 is serving the first user equipment 10. In other words, a wireless connection is established between the first user equipment 10 and the first base station 20. The first base station 20 may be a NodeB or eNodeB. The system is configured to execute the following steps that will be explained in detail below:
- a request for positioning information of the first user equipment is transmitted from a requesting service 40 to the location server 30,
- a first measurement data is transmitted from the first user equipment 10 to the location server 30,
- a second measurement data is transmitted from the first base station 20 to the location server 30, wherein the first base station 20 is serving the first user equipment 10,
- dependent on a use case requirement of the requesting service 40, the location server 30 selects one or more of the first measurement data and the second measurement data as selected measurement data,
- based on the selected measurement data the location server 30 determines positioning information for the first user equipment 10 and
- the determined positioning information is transmitted from the location server 30 to the requesting service 40.

In a first step, a request for position information of the first user equipment is sent by service 40 to the location server 30. Service 40 may be a service of the mobile communication network provider or a third-party service. The request may not only specify the first user equipment as target for which positioning information is requested but may also specify one or more use case requirements. Alternatively, a use case requirement specific to the requesting service 40 may be stored at the location server 30. Such use case requirement may comprise one or more of a positioning accuracy requirement, a confidence level requirement and an update rate of positioning information requirement. Alternatively or additionally, the skilled person may contemplate other use case requirements.

In order to determine the requested positioning information measurement data is provided by both the first user equipment 10 and the first base station 20. Measurements may be carried out at those devices automatically or triggered by a measurement request of the location server 30. For handling measurement data that was generated automatically the location server makes use of a push mode operation. In push mode operation, the first measurement data is transmitted from the first user equipment 10 to the location server 30 periodically or when triggered by an event and/or the second measurement data is transmitted from the first base station 20 to the location server 30 periodically or when triggered by an event. Alternatively, the location server may be operated in a pull mode. In pull mode the location server 30 transmits a measurement request to the first user equipment and/or the first base station 20. Upon transmission of the measurement request the first user equipment 10 transmits first measurement data to the location server 30 and/or the first base station 20 transmits second measurement data to the location server 30.

The first measurement data as well as the second measurement data is both transmitted to the location server 30 transparently. That means that the first and second measurement data is accessible by and visible to the location server 30. Preferably, transmission of measurement data is accomplished via a control plane of the mobile communication network 100. Control plane transmission is more reliable and robust as compared to transmission via a user plane. The first and/or second measurement data may be transmitted via a transport protocol, e.g. Transmission Control Protocol (TCP), Secure User Plane Protocol (SUPL) or O&M protocols.

The first user equipment 10 may measure the first measurement data by observing a radio signal of the first base station 20. Alternatively the first measurement data measured by a gyroscope and/or an accelerometer and/or a satellite navigation system receiver. The first base station 20 may measure the second measurement data by observing a radio signal of the first user equipment 10 or by observing a radio transmission channel between the first base station 20 and the first user equipment 10. For example, the first base station 20 may measure signal timing information or complex channel state information. The first base station 20 may analyse the MIMO receive path to derive complex channel state information. The measurements carried out may require interaction between the first user equipment 10 and the first base station 20, e.g. OTDOA measurements.

Having measurement data available from different sources, the location server 30 considers the use case requirement and selects one or more of the available measurement data as selected measurement data. The algorithm choses the respective measurement data in order to fulfil the use case requirement. If more than one available measurement data is chosen as selected measurement data, the individual pieces of selected measurement data may be weighted and combined. Thereby, the location server may make use of one or more of the following techniques: Proximity sensing based on Cell-ID, multi-lateration of time-difference-of-arrival measurements, multi-lateration of angle-of arrival measurements, RF channel modelling, RF finger printing, cooperative positioning, fusion with measurements from user equipment based sensors.

In Figure 2, a system according to a second embodiment of the invention is illustrated. The system comprises the same elements as the system depicted in Figure 1. However, the system includes various additional elements that will be explained in the following.

In the system according to the second embodiment, the mobile communication network 100 comprises a first base station 20 which is serving the first user equipment and at least one, preferably multiple, second base stations 21 which are not serving the first user equipment. Those second base stations 21 are base stations of the mobile communication network 100 that serve other cells than the cell the first user equipment 10 is currently connected to. For example the second base stations 21 may serve neighbouring cells.

The second base stations 21 transmit third measurement data to the location server 30. The third measurement data may be measured by observing a radio signal of the first user equipment 10.

The system of Figure 2 further includes at least one, preferably multiple, second pieces of user equipment 11 that are providing measurement data for determining positioning information of the first user equipment 10. The second user equipment measures fourth measurement data and transmits the fourth measurement data to the location server 30. The fourth measurement data may be measured by observing a radio signal of the first user equipment 10.

Furthermore, the first user equipment 10 may measure first measurement data by observing a radio signal of a second user equipment 11.

The third measurement data as well as the fourth measurement data are both transmitted to the location server 30 transparently in the same manner as described above for the first and second measurement data. At the location server 30 a measurement data of a plurality of measurement sources is available to select from dependent on the specified use case requirement.

The selection process will be described in more detail with reference to Figure 3. In the first and second embodiments described before, the location server 30 receives first, second and optionally third and fourth measurement data from a plurality of measurement sources 10, 11, 20, 21. As further input, the location server 30 receives the use case requirement of the requesting service 40 that may optionally be stored at the location server 30.

As a function of the use case requirement of the requesting service 40, the location server 30 selects one or more of the first measurement data, the second measurement data, the third measurement data and the fourth measurement as selected measurement data. The selection may optionally be based on a machine learning technique. The selected measurement data are employed to determine the positioning information for the first user equipment and the resulting positioning information is finally sent to the requesting service 40 via the mobile communication network 100.

## Claims

1. Method for providing positioning information of a first user equipment (10) in a mobile communication network (100), the mobile communication network (100) comprising a location server (30) and a first base station (20), the first base station (20) serving a first user equipment (10), wherein the method comprises the following steps:
- a request for positioning information of the first user equipment (10) is transmitted from a requesting service (40) to the location server (30), wherein the requesting service (40) is part of the mobile communication network (100) or is a third-party service connected to the mobile communication network (100),
- a first measurement data is transmitted from the first user equipment (10) to the location server (30), wherein the first measurement data is measured by observing a radio signal of a second user equipment (11); or
wherein the first measurement data is measured by a gyroscope and/or an accelerometer and/or a satellite navigation system receiver,
- a second measurement data is transmitted from the first base station (20) to the location server (30), wherein the first base station (20) is serving the first user equipment (10), wherein the location server (30) receives the first and second measurement data from the first user equipment (10) and the first base station (20),
- having measurement data available from different sources, dependent on a use case requirement of the requesting service (40), the location server (30) selects one or more of the first measurement data and the second measurement data as selected measurement data,
- based on the selected measurement data the location server (30) determines positioning information for the first user equipment (10) and
- the determined positioning information is transmitted from the location server (30) to the requesting service (40),
wherein the use case requirement of the requesting service (40) is stored at the location server (30), such that the requesting service (40) is served according to the respective use case requirement linked with said requesting service (40) and stored at the location server (30), wherein each time the location server (30) receives a request from said requesting service (40) the same use case requirement is taken into consideration for selecting measurement data.

2. Method according to claim 1, wherein the use case requirement comprises one or more of a positioning accuracy requirement, a confidence level requirement and an update rate of positioning information requirement.

3. Method according to any of the preceding claims, wherein the second measurement data is measured by observing a radio signal of the first user equipment (10); or wherein the second measurement data is measured by observing a radio transmission channel between the first base station (20) and the first user equipment (10).

4. Method according to any of the preceding claims, wherein the first measurement data is transmitted from the first user equipment (10) to the location server (30) periodically or when triggered by an event and/or the second measurement data is transmitted from the first base station (20) to the location server (30) periodically or when triggered by an event.

5. Method according to any of claims 1 to 3, wherein the first measurement data is transmitted from the first user equipment (10) to the location server (30) triggered by a measurement request of the location server (30) and/or the second measurement data is transmitted from the first base station (20) to the location server (30) triggered by a measurement request of the location server (30).

6. Method according to any of the preceding claims, wherein a third measurement data is transmitted from a second base station (21) to the location server (30), wherein the second base station (21) is not serving the first user equipment (10).

7. Method according to any of the preceding claims, wherein a fourth measurement data is transmitted from a second user equipment (11) to the location server (30).

8. Method according to any of claims 6 or 7, wherein the third measurement data and/or the fourth measurement data is measured by observing a radio signal of the first user equipment (10).

9. Method according to any of the preceding claims, wherein the location server (30) selects one or more of the first measurement data and the second measurement data as selected measurement data based on a machine learning technique.

10. Mobile communication network wherein the mobile communication network (100) comprises a location server (30) and a first base station (20) configured to serve a first user equipment (10), wherein the communication network (100) is configured to execute the following steps:
- a request for positioning information of the first user equipment (10) is transmitted from a requesting service (40) to the location server (30), wherein the requesting service (40) is part of the mobile communication network (100) or is a third-party service connected to the mobile communication network (100),
- a first measurement data is transmitted from the first user equipment (10) to the location server (30), wherein the first measurement data is measured by observing a radio signal of a second user equipment (11); or
wherein the first measurement data is measured by a gyroscope and/or an accelerometer and/or a satellite navigation system receiver,
- a second measurement data is transmitted from the first base station (20) to the location server (30), wherein the first base station (20) is serving the first user equipment (10), wherein the location server (30) receives the first and second measurement data from the first user equipment (10) and the first base station (20),
- having measurement data available from different sources, dependent on a use case requirement of the requesting service (40), the location server (30) selects one or more of the first measurement data and the second measurement data as selected measurement data,
- based on the selected measurement data the location server (30) determines positioning information for the first user equipment (10) and
- the determined positioning information is transmitted from the location server (30) to the requesting service (40),
wherein the use case requirement of the requesting service (40) is stored at the location server (30), such that the requesting service (40) is served according to the respective use case requirement linked with said requesting service (40) and stored at the location server (30), wherein each time the location server (30) receives a request from said requesting service (40) the same use case requirement is taken into consideration for selecting measurement data.

11. System comprising a mobile communication network (100) and a first user equipment (10), wherein the mobile communication network (100) comprises a location server (30) and a first base station (20), wherein the first base station (20) is serving the first user equipment (10), wherein the system is configured to execute the following steps:
- a request for positioning information of the first user equipment (10) is transmitted from a requesting service (40) to the location server, wherein the requesting service (40) is part of the mobile communication network (100) or is a third-party service connected to the mobile communication network (100),
- a first measurement data is transmitted from the first user equipment (10) to the location server (30), wherein the first measurement data is measured by observing a radio signal of a second user equipment (11); or
wherein the first measurement data is measured by a gyroscope and/or an accelerometer and/or a satellite navigation system receiver,
- a second measurement data is transmitted from the first base station (20) to the location server (30), wherein the first base station (20) is serving the first user equipment (10), wherein the location server (30) receives the first and second measurement data from the first user equipment (10) and the first base station (20),
- having measurement data available from different sources, dependent on a use case requirement of the requesting service (40), the location server (30) selects one or more of the first measurement data and the second measurement data as selected measurement data,
- based on the selected measurement data the location server (30) determines positioning information for the first user equipment (10) and
- the determined positioning information is transmitted from the location server (30) to the requesting service (40),
wherein the use case requirement of the requesting service (40) is stored at the location server (30), such that the requesting service (40) is served according to the respective use case requirement linked with said requesting service (40) and stored at the location server (30), wherein each time the location server (30) receives a request from said requesting service (40) the same use case requirement is taken into consideration for selecting measurement data.

12. Computer program comprising a computer readable program code which, when executed on a server of a communication network (100) or in part on a server and in part on a user equipment (10), causes the server and/or the user equipment (10, 11) to perform a method according one of claims 1 to 9.

13. Computer program product for providing positioning information of a user equipment (10) in a mobile communication network (100), the computer program product comprising a computer program stored on a storage medium, the computer program comprising program code which, when executed on a server of a communication network or in part on a server and in part on a user equipment (10, 11), causes the server and/or the user equipment (10, 11) to perform a method according one of claims 1 to 9.

## Patentansprüche

1. Verfahren zum Bereitstellen von Positionsinformationen eines ersten Benutzergeräts (10) in einem Mobilfunknetz (100), wobei das Mobilfunknetz (100) einen Positionsbestimmungsserver (30) und eine erste Basisstation (20) umfasst, wobei die erste Basisstation (20) ein erstes Benutzergerät (10) versorgt, wobei das Verfahren die folgenden Schritte umfasst:
- eine Anfrage nach Positionsinformationen des ersten Benutzergeräts (10) wird von einem anfragenden Dienst (40) an den Positionsbestimmungsserver (30) übermittelt, wobei der anfragende Dienst (40) Bestandteil des Mobilfunknetzes (100) ist oder einen Drittparteiendienst darstellt, der mit dem Mobilfunknetz (100) verbunden ist,
- ein erster Messdatensatz wird von dem ersten Benutzergerät (10) an den Positionsbestimmungsserver (30) übertragen, wobei die Messung des ersten Messdatensatzes erfolgt, indem ein Funksignal eines zweiten Benutzergeräts (11) erfasst wird; oder wobei die Messung des ersten Messdatensatzes mittels eines Kreiselkompasses und/oder eines Beschleunigungsmessers und/oder eines Satellitennavigationssystem-Empfängers erfolgt,
- ein zweiter Messdatensatz wird von der ersten Basisstation (20) an den Positionsbestimmungsserver (30) übertragen, wobei die erste Basisstation (20) das erste Benutzergerät (10) versorgt, wobei der Positionsbestimmungsserver (30) den ersten und den zweiten Messdatensatz von dem ersten Benutzergerät (10) und der ersten Basisstation (20) empfängt,
- da Messdatensätze aus verschiedenen Quellen zur Verfügung stehen, wählt der Positionsbestimmungsserver (30), in Abhängigkeit von den anwendungsfallbezogenen Anforderungen des anfragenden Dienstes (40), aus dem ersten Messdatensatz und dem zweiten Messdatensatz mindestens einen als ausgewählten Messdatensatz aus,
- auf Grundlage des ausgewählten Messdatensatzes bestimmt der Positionsbestimmungsserver (30) die Positionsinformationen für das erste Benutzergerät (10) und
- die bestimmten Positionsinformationen werden von dem Positionsbestimmungsserver (30) an den anfragenden Dienst (40) übertragen,
wobei die anwendungsfallbezogenen Anforderungen des anfragenden Dienstes (40) derart im Positionsbestimmungsserver (30) gespeichert werden, dass der anfragende Dienst (40) nach den jeweiligen anwendungsfallbezogenen Anforderungen versorgt wird, welche mit dem anfragenden Dienst (40) verknüpft sind und im Positionsbestimmungsserver (30) gespeichert sind, wobei jedes Mal, wenn der Positionsbestimmungsserver (30) eine Anfrage von dem anfragenden Dienst (40) erhält, dieselben anwendungsfallbezogenen Anforderungen berücksichtigt werden, um den Messdatensatz auszuwählen.

2. Verfahren nach Anspruch 1, wobei die anwendungsfallbezogenen Anforderungen von einer Anforderung hinsichtlich der Ortsgenauigkeit, einer Anforderung hinsichtlich des Vertrauensniveaus und einer Anforderung hinsichtlich der Aktualisierungsrate der Positionsinformationen mindestens eine umfassen.

3. Verfahren nach einem der vorhergehenden Ansprüche, wobei die Messung des zweiten Messdatensatzes erfolgt, indem ein Funksignal des ersten Benutzergeräts (10) erfasst wird; oder wobei die Messung des zweiten Messdatensatzes erfolgt, indem ein Funkübertragungskanal zwischen der ersten Basisstation (20) und dem ersten Benutzergerät (10) erfasst wird.

4. Verfahren nach einem der vorhergehenden Ansprüche, wobei die Übertragung des ersten Messdatensatzes von dem ersten Benutzergerät (10) an den Positionsbestimmungsserver (30) periodisch oder im Falle der Auslösung durch ein Ereignis erfolgt und/oder die Übertragung des zweiten Messdatensatzes von der ersten Basisstation (20) an den Positionsbestimmungsserver (30) periodisch oder im Falle der Auslösung durch ein Ereignis erfolgt.

5. Verfahren nach einem der Ansprüche 1 bis 3, wobei die Übertragung des ersten Messdatensatzes von dem ersten Benutzergerät (10) an den Positionsbestimmungsserver (3) durch eine Messanfrage des Positionsbestimmungsservers (30) ausgelöst wird und/oder die Übertragung des zweiten Messdatensatzes von der ersten Basisstation (20) an den Positionsbestimmungsserver (30) durch eine Messanfrage des Positionsbestimmungsservers (30) ausgelöst wird.

6. Verfahren nach einem der vorhergehenden Ansprüche, wobei ein dritter Messdatensatz von einer zweiten Basisstation (21) an den Positionsbestimmungsserver (30) übertragen wird, wobei die zweite Basisstation (21) nicht das erste Benutzergerät (10) versorgt.

7. Verfahren nach einem beliebigen der vorhergehenden Ansprüche, wobei ein vierter Messdatensatz von einem zweiten Benutzergerät (11) an den Positionsbestimmungsserver (30) übertragen wird.

8. Verfahren nach einem der Ansprüche 6 oder 7, wobei die Messung des dritten Messdatensatzes und/oder des vierten Messdatensatzes erfolgt, indem ein Funksignal des ersten Benutzergeräts (10) erfasst wird.

9. Verfahren nach einem der vorhergehenden Ansprüche, wobei der Positionsbestimmungsserver (30) auf Grundlage einer Maschinenlerntechnik aus dem ersten Messdatensatz und dem zweiten Messdatensatz mindestens einen als ausgewählte(n) Messdatensatz/Messdatensätze auswählt.

10. Mobilfunknetz, wobei das Mobilfunknetz (100) einen Positionsbestimmungsserver (30) sowie eine erste Basisstation (20) umfasst, die dafür ausgelegt ist, ein erstes Benutzergerät (10) zu versorgen, wobei das Mobilfunknetz (100) dafür ausgelegt ist, die folgenden Schritte auszuführen:
- eine Anfrage nach Positionsinformationen des ersten Benutzergeräts (10) wird von einem anfragenden Dienst (40) an den Positionsbestimmungsserver (30) übermittelt, wobei der anfragende Dienst (40) Bestandteil des Mobilfunknetzes (100) ist oder einen Drittparteiendienst darstellt, der mit dem Mobilfunknetz (100) verbunden ist,
- ein erster Messdatensatz wird von dem ersten Benutzergerät (10) an den Positionsbestimmungsserver (30) übertragen, wobei die Messung des ersten Messdatensatzes erfolgt, indem ein Funksignal eines zweiten Benutzergeräts (11) erfasst wird; oder wobei die Messung des ersten Messdatensatzes mittels eines Kreiselkompasses und/oder eines Beschleunigungsmessers und/oder eines Satellitennavigationssystem-Empfängers erfolgt,
- ein zweiter Messdatensatz wird von der ersten Basisstation (20) an den Positionsbestimmungsserver (30) übertragen, wobei die erste Basisstation (20) das erste Benutzergerät (10) versorgt, wobei der Positionsbestimmungsserver (30) den ersten und den zweiten Messdatensatz von dem ersten Benutzergerät (10) und der ersten Basisstation (20) empfängt,
- da Messdatensätze aus verschiedenen Quellen zur Verfügung stehen, wählt der Positionsbestimmungsserver (30), in Abhängigkeit von den anwendungsfallbezogenen Anforderungen des anfragenden Dienstes (40), aus dem ersten Messdatensatz und dem zweiten Messdatensatz mindestens einen als ausgewählten Messdatensatz aus,
- auf Grundlage des ausgewählten Messdatensatzes bestimmt der Positionsbestimmungsserver (30) die Positionsinformationen für das erste Benutzergerät (10) und
- die bestimmten Positionsinformationen werden von dem Positionsbestimmungsserver (30) an den anfragenden Dienst (40) übertragen,
wobei die anwendungsfallbezogenen Anforderungen des anfragenden Dienstes (40) derart im Positionsbestimmungsserver (30) gespeichert werden, dass der anfragende Dienst (40) nach den jeweiligen anwendungsfallbezogenen Anforderungen versorgt wird, die mit dem anfragenden Dienst (40) verknüpft sind und im Positionsbestimmungsserver (30) gespeichert sind, wobei jedes Mal, wenn der Positionsbestimmungsserver (30) eine Anfrage von dem anfragenden Dienst (40) erhält, dieselben anwendungsfallbezogenen Anforderungen berücksichtigt werden, um den Messdatensatz auszuwählen.

11. System, umfassend ein Mobilfunknetz (100) und ein erstes Benutzergerät (10), wobei das Mobilfunknetz (100) einen Positionsbestimmungsserver (30) und eine erste Basisstation (20) umfasst, wobei die erste Basisstation (20) das erste Benutzergerät (10) versorgt, wobei das System dafür ausgelegt ist, die folgenden Schritte auszuführen:
- eine Anfrage nach Positionsinformationen des ersten Benutzergeräts (10) wird von einem anfragenden Dienst (40) an den Positionsbestimmungsserver übermittelt, wobei der anfragende Dienst (40) Bestandteil des Mobilfunknetzes (100) ist oder einen Drittparteiendienst darstellt, der mit dem Mobilfunknetz (100) verbunden ist,
- ein erster Messdatensatz wird von dem ersten Benutzergerät (10) an den Positionsbestimmungsserver (30) übertragen, wobei die Messung des ersten Messdatensatzes erfolgt, indem ein Funksignal eines zweiten Benutzergeräts (11) erfasst wird; oder wobei die Messung des ersten Messdatensatzes mittels eines Kreiselkompasses und/oder eines Beschleunigungsmessers und/oder eines Satellitennavigationssystem-Empfängers erfolgt,
- ein zweiter Messdatensatz wird von der ersten Basisstation (20) an den Positionsbestimmungsserver (30) übertragen, wobei die erste Basisstation (20) das erste Benutzergerät (10) versorgt, wobei der Positionsbestimmungsserver (30) den ersten und den zweiten Messdatensatz von dem ersten Benutzergerät (10) und der ersten Basisstation (20) empfängt,
- da Messdatensätze aus verschiedenen Quellen zur Verfügung stehen, wählt der Positionsbestimmungsserver (30), in Abhängigkeit von den anwendungsfallbezogenen Anforderungen des anfragenden Dienstes (40), aus dem ersten Messdatensatz und dem zweiten Messdatensatz mindestens einen als ausgewählten Messdatensatz aus,
- auf Grundlage des ausgewählten Messdatensatzes bestimmt der Positionsbestimmungsserver (30) die Positionsinformationen für das erste Benutzergerät (10) und
- die bestimmten Positionsinformationen werden von dem Positionsbestimmungsserver (30) an den anfragenden Dienst (40) übertragen,
wobei die anwendungsfallbezogenen Anforderungen des anfragenden Dienstes (40) derart im Positionsbestimmungsserver (30) gespeichert werden, dass der anfragende Dienst (40) nach den jeweiligen anwendungsfallbezogenen Anforderungen versorgt wird, die mit dem anfragenden Dienst (40) verknüpft sind und im Positionsbestimmungsserver (30) gespeichert sind, wobei jedes Mal, wenn der Positionsbestimmungsserver (30) eine Anfrage von dem anfragenden Dienst (40) erhält, dieselben anwendungsfallbezogenen Anforderungen berücksichtigt werden, um den Messdatensatz auszuwählen.

12. Computerprogramm, umfassend einen maschinenlesbaren Programmcode, der im Falle seiner Ausführung auf einem Server eines Mobilfunknetzes (100) oder teilweise auf einem Server und teilweise auf einem Benutzergerät (10) bewirkt, dass der Server und/oder das Benutzergerät (10, 11) ein Verfahren nach einem der Ansprüche 1 bis 9 ausführen.

13. Computerprogrammprodukt zur Bereitstellung von Positionsinformationen eines Benutzergeräts (10) in einem Mobilfunknetz (100), wobei das Computerprogrammprodukt ein Computerprogramm umfasst, das auf einem Speichermedium gespeichert ist; wobei das Computerprogramm einen Programmcode umfasst, der im Falle seiner Ausführung auf einem Server eines Mobilfunknetzes oder teilweise auf einem Server und teilweise auf einem Benutzergerät (10, 11) bewirkt, dass der Server und/oder das Benutzergerät (10, 11) ein Verfahren nach einem der Ansprüche 1 bis 9 ausführen.

## Revendications

1. Procédé de fourniture d'informations de positionnement d'un premier équipement utilisateur (10) dans un réseau de communication mobile (100), le réseau de communication mobile (100) comprenant un serveur de localisation (30) et une première station de base (20), la première station de base (20) desservant un premier équipement utilisateur (10), dans lequel le procédé comprend les étapes suivantes :
- une demande d'informations de positionnement du premier équipement utilisateur (10) est transmise d'un service demandeur (40) au serveur de localisation (30), dans lequel le service demandeur (40) fait partie du réseau de communication mobile (100) ou est un service tiers connecté au réseau de communication mobile (100),
- une première donnée de mesure est transmise du premier équipement utilisateur (10) au serveur de localisation (30), dans lequel la première donnée de mesure est mesurée en observant un signal radio d'un second équipement utilisateur (11) ; ou dans lequel la première donnée de mesure est mesurée par un gyroscope et/ou un accéléromètre et/ou un récepteur de système de navigation par satellite,
- une deuxième donnée de mesure est transmise de la première station de base (20) au serveur de localisation (30), dans lequel la première station de base (20) dessert le premier équipement utilisateur (10), dans lequel le serveur de localisation (30) reçoit les première et deuxième données de mesure en provenance du premier équipement utilisateur (10) et de la première station de base (20),
- disposant de données de mesure provenant de sources différentes, en fonction d'une exigence de cas d'utilisation du service demandeur (40), le serveur de localisation (30) sélectionne une ou plusieurs parmi la première donnée de mesure et la deuxième donnée de mesure en tant que données de mesure sélectionnées,
- d'après les données de mesure sélectionnées, le serveur de localisation (30) détermine des informations de positionnement pour le premier équipement utilisateur (10) et
- les informations de positionnement déterminées sont transmises du serveur de localisation (30) au service demandeur (40),
dans lequel l'exigence de cas d'utilisation du service demandeur (40) est stockée au niveau du serveur de localisation (30), de sorte que le service demandeur (40) soit desservi selon l'exigence de cas d'utilisation respective liée audit service demandeur (40) et stockée au niveau du serveur de localisation (30), dans lequel à chaque fois que le serveur de localisation (30) reçoit une demande en provenance dudit service demandeur (40) la même exigence de cas d'utilisation est prise en considération pour sélectionner des données de mesure.

2. Procédé selon la revendication 1, dans lequel l'exigence de cas d'utilisation comprend une ou plusieurs parmi une exigence de précision de positionnement, une exigence de niveau de confiance et une fréquence de mise à jour d'exigence d'informations de positionnement.

3. Procédé selon l'une quelconque des revendications précédentes, dans lequel la deuxième donnée de mesure est mesurée en observant un signal radio du premier équipement utilisateur (10) ; ou
dans lequel la deuxième donnée de mesure est mesurée en observant un canal de transmission radio entre la première station de base (20) et le premier équipement utilisateur (10).

4. Procédé selon l'une quelconque des revendications précédentes, dans lequel la première donnée de mesure est transmise du premier équipement utilisateur (10) au serveur de localisation (30) périodiquement ou lorsqu'elle est déclenchée par un événement et/ou la deuxième donnée de mesure est transmise de la première station de base (20) au serveur de localisation (30) périodiquement ou lorsqu'elle est déclenchée par un événement.

5. Procédé selon l'une quelconque des revendications 1 à 3, dans lequel la première donnée de mesure est transmise du premier équipement utilisateur (10) au serveur de localisation (30) déclenchée par une demande de mesure du serveur de localisation (30) et/ou la deuxième donnée de mesure est transmise de la première station de base (20) au serveur de localisation (30) déclenchée par une demande de mesure du serveur de localisation (30).

6. Procédé selon l'une quelconque des revendications précédentes, dans lequel une troisième donnée de mesure est transmise d'une seconde station de base (21) au serveur de localisation (30), dans lequel la seconde station de base (21) ne dessert pas le premier équipement utilisateur (10).

7. Procédé selon l'une quelconque des revendications précédentes, dans lequel une quatrième donnée de mesure est transmise d'un second équipement utilisateur (11) au serveur de localisation (30).

8. Procédé selon l'une quelconque des revendications 6 ou 7, dans lequel la troisième donnée de mesure et/ou la quatrième donnée de mesure sont mesurées en observant un signal radio du premier équipement utilisateur (10).

9. Procédé selon l'une quelconque des revendications précédentes, dans lequel le serveur de localisation (30) sélectionne une ou plusieurs parmi la première donnée de mesure et la deuxième donnée de mesure en tant que données de mesure sélectionnées d'après une technique d'apprentissage machine.

10. Réseau de communication mobile dans lequel le réseau de communication mobile (100) comprend un serveur de localisation (30) et une première station de base (20) configurée pour desservir un premier équipement utilisateur (10), dans lequel le réseau de communication mobile (100) est configuré pour exécuter les étapes suivantes :
- une demande d'informations de positionnement du premier équipement utilisateur (10) est transmise d'un service demandeur (40) au serveur de localisation (30), dans lequel le service demandeur (40) fait partie du réseau de communication mobile (100) ou est un service tiers connecté au réseau de communication mobile (100),
- une première donnée de mesure est transmise du premier équipement utilisateur (10) au serveur de localisation (30), dans lequel la première donnée de mesure est mesurée en observant un signal radio d'un second équipement utilisateur (11) ; ou dans lequel la première donnée de mesure est mesurée par un gyroscope et/ou un accéléromètre et/ou un récepteur de système de navigation par satellite,
- une deuxième donnée de mesure est transmise de la première station de base (20) au serveur de localisation (30), dans lequel la première station de base (20) dessert le premier équipement utilisateur (10), dans lequel le serveur de localisation (30) reçoit les première et deuxième données de mesure en provenance du premier équipement utilisateur (10) et de la première station de base (20),
- disposant de données de mesure provenant de sources différentes, en fonction d'une exigence de cas d'utilisation du service demandeur (40), le serveur de localisation (30) sélectionne une ou plusieurs parmi la première donnée de mesure et la deuxième donnée de mesure en tant que données de mesure sélectionnées,
- d'après les données de mesure sélectionnées, le serveur de localisation (30) détermine des informations de positionnement pour le premier équipement utilisateur (10) et
- les informations de positionnement déterminées sont transmises du serveur de localisation (30) au service demandeur (40),
dans lequel l'exigence de cas d'utilisation du service demandeur (40) est stockée au niveau du serveur de localisation (30), de sorte que le service demandeur (40) soit desservi selon l'exigence de cas d'utilisation respective liée audit service demandeur (40) et stockée au niveau du serveur de localisation (30), dans lequel à chaque fois que le serveur de localisation (30) reçoit une demande en provenance dudit service demandeur (40) la même exigence de cas d'utilisation est prise en considération pour sélectionner des données de mesure.

11. Système comprenant un réseau de communication mobile (100) et un premier équipement utilisateur (10), dans lequel le réseau de communication mobile (100) comprend un serveur de localisation (30) et une première station de base (20), dans lequel la première station de base (20) dessert le premier équipement utilisateur (10), dans lequel le système est configuré pour exécuter les étapes suivantes :
- une demande d'informations de positionnement du premier équipement utilisateur (10) est transmise d'un service demandeur (40) au serveur de localisation, dans lequel le service demandeur (40) fait partie du réseau de communication mobile (100) ou est un service tiers connecté au réseau de communication mobile (100),
- une première donnée de mesure est transmise du premier équipement utilisateur (10) au serveur de localisation (30), dans lequel la première donnée de mesure est mesurée en observant un signal radio d'un second équipement utilisateur (11) ; ou dans lequel la première donnée de mesure est mesurée par un gyroscope et/ou un accéléromètre et/ou un récepteur de système de navigation par satellite,
- une deuxième donnée de mesure est transmise de la première station de base (20) au serveur de localisation (30), dans lequel la première station de base (20) dessert le premier équipement utilisateur (10), dans lequel le serveur de localisation (30) reçoit les première et deuxième données de mesure en provenance du premier équipement utilisateur (10) et de la première station de base (20),
- disposant de données de mesure provenant de sources différentes, en fonction d'une exigence de cas d'utilisation du service demandeur (40), le serveur de localisation (30) sélectionne une ou plusieurs parmi la première donnée de mesure et la deuxième donnée de mesure en tant que données de mesure sélectionnées,
- d'après les données de mesure sélectionnées, le serveur de localisation (30) détermine des informations de positionnement pour le premier équipement utilisateur (10) et
- les informations de positionnement déterminées sont transmises du serveur de localisation (30) au service demandeur (40),
dans lequel l'exigence de cas d'utilisation du service demandeur (40) est stockée au niveau du serveur de localisation (30), de sorte que le service demandeur (40) soit desservi selon l'exigence de cas d'utilisation respective liée audit service demandeur (40) et stockée au niveau du serveur de localisation (30), dans lequel à chaque fois que le serveur de localisation (30) reçoit une demande en provenance dudit service demandeur (40) la même exigence de cas d'utilisation est prise en considération pour sélectionner des données de mesure.

12. Programme d'ordinateur comprenant un code de programme lisible par ordinateur qui, lorsqu'il est exécuté sur un serveur d'un réseau de communication (100) ou en partie sur un serveur et en partie sur un équipement utilisateur (10), amène le serveur et/ou l'équipement utilisateur (10, 11) à réaliser un procédé selon l'une des revendications 1 à 9.

13. Produit-programme d'ordinateur pour fournir des informations de positionnement d'un équipement utilisateur (10) dans un réseau de communication mobile (100), le produit-programme d'ordinateur comprenant un programme d'ordinateur stocké sur un support de stockage, le programme d'ordinateur comprenant un code de programme qui, lorsqu'il est exécuté sur un serveur d'un réseau de communication ou en partie sur un serveur et en partie sur un équipement utilisateur (10, 11), amène le serveur et/ou l'équipement utilisateur (10, 11) à réaliser un procédé selon l'une des revendications 1 à 9.
